# EUROPÄISCHE PATENTSCHRIFT

(11) **EP 2 273 111 B1**
(45) Veröffentlichungstag und Bekanntmachung des Hinweises auf die Patenterteilung: **28.01.2015**
(21) Anmeldenummer: 10165354.1
(22) Anmeldetag: 09.06.2010
(51) Int. Cl.: F03D 11/02, F16H 57/02

(54) **Getriebe einer Windenergieanlage**
Transmission for a wind turbine
Transmission pour éolienne

(30) Priorität: 09.07.2009 DE 102009032667
(43) Veröffentlichungstag der Anmeldung: 12.01.2011
(73) Patentinhaber: Senvion SE, 22297 Hamburg (DE)
(72) Erfinder: Fuglsang-Petersen, Jochen, 24613, Aukrug (DE); Franke, Jan-Bernd, 25336 Elmshorn (DE)
(74) Vertreter: Grebner, Christian Georg Rudolf

(56) Entgegenhaltungen:
- DE-A1-102007 037 542
- US-A- 3 884 098

## Beschreibung

Die Erfindung betrifft ein Getriebe einer Windenergieanlage, insbesondere mehrstufiges Getriebe einer Windenergieanlage, wobei das Getriebe ein Getriebegehäuse aufweist, wobei an der Außenseite des Getriebegehäuses wenigstens eine Zugangsöffnung zum Einbringen eines Arbeitsinstruments in das Getriebegehäuse vorgesehen ist und dass im Inneren des Getriebegehäuses wenigstens ein Führungsmittel für das Arbeitsinstrument vorgesehen ist, so dass das Arbeitsinstrument innerhalb des Führungsmittels bewegbar und/oder positionierbar ist, wobei insbesondere mittels des im Führungsmittel eingebrachten oder angeordneten oder anordbaren Arbeitsinstruments Teile des Getriebes im Getriebegehäuse geprüft und/oder bearbeitet werden oder wenigstens eine physikalische Eigenschaft eines Mediums, insbesondere von Öl, im Getriebegehäuse oder physikalische Eigenschaften von Bauteilen des Getriebes erfasst werden. Ferner betrifft die Erfindung eine Windenergieanlage sowie eine Verwendung eines Arbeitsinstruments.

Windenergieanlagen der Patentanmelderin sind unter der Bezeichnung 5M, MM92, MM82, MM70 sowie MD77 bekannt. Die Windenergieanlagen können sowohl auf dem Boden (onshore) oder in Gewässern (offshore) errichtet werden.

Bei Windenergieanlagen sind die Rotoren der Windenergieanlage über einen Triebstrang mit einem Getriebe und einem Generator verbunden. Hierbei weist die Windenergieanlage in der Regel eine Rotorwelle auf, an deren einem Ende die Rotorwelle mit dem Rotor und an ihrem anderen Ende mit dem Getriebe gekoppelt ist. Die Rotorblätter der Windenergieanlage sind an einer Rotornabe befestigt, die ihrerseits wiederum mit der Rotorwelle verbunden ist. Die Drehbewegung des Rotors wird über die Rotorwelle auf das Getriebe übertragen, so dass das Getriebe über einen generatorseitigen Abtrieb mit einem Generator in Wirkverbindung ist.

Bei gattungsgemäßen Windenergieanlagen kann das Getriebe mehrstufig ausgebildet sein, wobei das Getriebe in der Regel eine oder mehrere Planetenstufen sowie ggfs. eine oder weitere Getriebestufen (Stirnradstufen) aufweist.

Häufig ist die erste Getriebestufe eines mehrstufigen Getriebes bei gattungsgemäßen Windenergieanlagen als Planetenstufe ausgebildet, wobei der Rotor mit dem Planetenradträger oder dem Hohlrad der Planetenstufe gekoppelt ist. Hierbei besteht die Planetenstufe im Allgemeinen aus einem Sonnenrad, um das mehrere, mit dem Sonnenrad kämmende Planetenräder angeordnet sind, wobei die Planetenräder in einem Planetenradträger gelagert sind. Das Sonnenrad, die Planetenräder und Teile des Planetenradträgers sind von einem Hohlrad umgeben, wobei das Hohlrad so ausgebildet ist, dass es mit den Planetenrädern kämmt.

Beispielsweise sind in DE-B-103 57 026 sowie DE-B-103 34 448 Windenergieanlagen mit mehrstufigen Getrieben beschrieben.

In DE-A-10 2007 037 542 ist ferner ein Windenergieanlagengetriebe mit einem Gehäuse offenbart, wobei das Gehäuse mehrere Gehäuseabschnitte aufweist. Hierbei ist eine Inspektionsöffnung in einem mittleren Gehäuseabschnitt zwischen dem rotorseitigen Gehäuseabschnitt und dem generatorseitigen Gehäuseabschnitt angeordnet. Durch die Inspektionsöffnung wird eine Inspektion des Getriebes durch Einführen eines entsprechenden Inspektionswerkzeugs ermöglicht.

Darüber hinaus ist in US-A-3 884 098 ein Planetengetriebe offenbart, wobei das Gehäuse des Getriebes Schaulochdeckel aufweist, wobei die nach Entfernen der Schaulochdeckel an den Bohrungen Zugangsöffnungen bereitgestellt werden, so dass ein Endoskop durch die Bohrungen bzw. Zugangsöffnungen in einen Planetenradträger eingeführt werden kann.

Ausgehend von diesem Stand der Technik besteht die Aufgabe der Erfindung darin, bei einer Windenergieanlage Wartungsmaßnahmen an einem, insbesondere mehrstufigen, Getriebe auf einfache Weise durchzuführen, wobei der zeitliche und konstruktive Aufwand möglichst gering gehalten werden soll.

Gelöst wird diese Aufgabe durch ein Getriebe einer Windenergieanlage, insbesondere ein mehrstufiges Getriebe einer Windenergieanlage, wobei das Getriebe ein Getriebegehäuse aufweist, wobei an der Außenseite des Getriebegehäuses wenigstens eine Zugangsöffnung zum Einbringen eines Arbeitsinstruments in das Getriebegehäuse bzw. in den Innenraum des Getriebegehäuses vorgesehen ist und dass im Inneren des Getriebegehäuses wenigstens ein Führungsmittel für das Arbeitsinstrument vorgesehen ist, so dass das Arbeitsinstrument innerhalb des Führungsmittels bewegbar und/oder positionierbar ist, wobei insbesondere mittels des im Führungsmittel eingebrachten oder angeordneten oder anordbaren Arbeitsinstruments Teile des Getriebes im Getriebegehäuse geprüft bzw. untersucht und/oder bearbeitet werden oder wenigstens eine physikalische Eigenschaft eines Mediums, insbesondere von Öl, im Getriebegehäuse oder physikalische Eigenschaften von Bauteilen des Getriebes erfasst werden bzw. erfassbar sind, das dadurch weitergebildet wird, dass das Führungsmittel als Führungsrohr bzw. Leerrohr und/oder als Führungsschlauch ausgebildet ist.

Die Erfindung beruht auf dem Gedanken, dass bei errichteten Windenergieanlagen ein Getriebe, insbesondere Planetengetriebe, auf einfache Weise im Inneren untersucht, geprüft und/oder auch bearbeitet, z.B. repariert, werden kann. Hierzu ist es möglich, durch das Führungsmittel, z.B. ein Führungsrohr oder Leerrohr, ein Arbeitsinstrument in das Gehäuse auf einer gezielten und definierten geführten Bahn einzubringen, wobei das Arbeitsinstrument eine Prüfeinrichtung, eine Messeinrichtung, ein Werkzeug oder eine Bearbeitungseinrichtung sein kann, so dass durch eine exakte Führung des Arbeitsinstrumentes in dem beispielsweise als Führungsrohr oder -schlauch ausgebildeten Führungsmittel das Arbeitsinstrument an vorbestimmten Stellen bzw. Bauteilen im Getriebe positioniert wird, um mit dem Arbeitsinstrument entsprechende Maßnahmen (Untersuchungen, Inspektionen oder ggf. Reparaturen) durchzuführen. Hierdurch werden die entsprechenden Arbeitsinstrumente an den relevanten Bauteilen innerhalb des Getriebes, die aufgrund der baulichen Art schwer zugänglich sind, dort angeordnet.

Beispielsweise ist es im Rahmen der Erfindung denkbar, dass das Arbeitsinstrument als Wärmesensor, z.B. Infrarotsensor oder dergleichen, ausgeführt ist, um die Wärmeentwicklung an bestimmten Bauteilen des Getriebes während der Aufwärmphase oder Betriebsphase oder in der Abkühlphase zu erfassen bzw. zu detektieren.

Durch die geführte Positionierung und präzise Führung des Arbeitsinstruments unter Verwendung des leeren Führungsrohrs bzw. Leerrohrs wird das Arbeitsinstrument schnell und auf einfache Weise zu den relevanten Bauteilen oder Stellen im Inneren des Getriebegehäuses geführt, da während des Einbringvorgangs das Arbeitsinstrument schlauchförmig durch das Führungsrohr geleitet wird. Insofern ist es zur Positionierung des Arbeitsinstrumentes an der gewünschten Stelle innerhalb des Getriebes nicht mehr erforderlich, sich auf das Geschick des Wartungspersonals und dessen räumliches Vorstellungsvermögen zu verlassen. Insbesondere werden schwer zugängliche Positionen schnell innerhalb des Getriebeinnenraums aufgrund der definierten Führung des Arbeitsinstrumentes durch das Leerrohr erreicht.

Durch das vorgesehene Führungsrohr bzw. Leerrohr, das im Inneren des Getriebegehäuses angeordnet ist, wird eine Führungseinrichtung für das Arbeitsinstrument bereitgestellt. Über die an der Außenseite des Getriebegehäuses vorgesehene Zugangsöffnung wird das Arbeitsinstrument in das Rohr eingebracht, da die Zugangsöffnung und die Eintrittsseite des Führungsrohrs zusammenwirken oder miteinander kommunizierend angeordnet sind.

Mittels der Erfindung ist es somit möglich, auf einfache und schnelle Weise den inneren Zustand eines Getriebes, beispielsweise durch Einbringen eines Endoskops in das Führungsrohr, zu erfassen und zu dokumentieren.

Gemäß der Erfindung ist das Führungsmittel für das Arbeitsinstrument im Getriebe als Führungsrohr bzw. Leerrohr und/oder als Führungsschlauch ausgebildet. Hierdurch ist das Führungsmittel für das Arbeitsinstrument wenigstens abschnittsweise rohrförmig und/oder wenigstens abschnittsweise schlauchförmig im Innern des Getriebegehäuses ausgebildet bzw. verlegt. Wenn im Rahmen der vorliegenden Erfindung von einem Führungsrohr die Rede ist, ist in gleicher Weise auch ein Führungsschlauch mit umfasst. Ferner wird in Rahmen der Erfindung unter einem Führungsmittel für das Arbeitsinstrument ein Führungsrohr oder ein Führungsschlauch sowie eine Kombination der beiden Führungseinrichtungen verstanden, in die das Arbeitsinstrument eingebracht wird. Vorzugsweise besitzt der Führungsschlauch eine vorbestimmte Elastizität, so dass der Führungsschlauch biegbar ist.

Dazu ist weiter vorgesehen, dass das Führungsmittel, z.B. ein Führungsrohr, im Querschnitt wenigstens abschnittsweise geschlossen ausgebildet ist, so dass hierdurch während eines Einbringvorgangs in das Führungsrohr bzw. Leerrohr in Längsrichtung des Führungsrohres das Arbeitsinstrument innerhalb des Rohrs gehalten wird, wodurch das Innere des Führungsrohrs von außen in den Abschnitten nicht frei zugänglich ist und innerhalb des geschlossenen Abschnittes das Arbeitsinstrument bzw. ein Abschnitt des Arbeitsinstrumentes aufgenommen ist. Im Rahmen der Erfindung wird unter einem im Querschnitt geschlossenen Führungsmittel ein Führungsrohr oder -schlauch verstanden, so dass das im Führungsmittel eingebrachte Arbeitsinstrument während des Einbring- bzw. Positioniervorgangs seitlich bzw. quer zur Führungsrichtung nicht entweichen kann und im Führungsrohr oder -schlauch angeordnet bleibt.

Durch die Erfindung werden keine baulichen Maßnahmen oder Änderungen an den bestehenden Getriebeteilen im Inneren des Getriebes vorgenommen, da zusätzlich zu den vorhandenen Getriebeteilen externe Führungsrohre oder Führungsschläuche im Inneren des Getriebegehäuses angeordnet werden. Beispielsweise wird durch das Leerrohr bzw. Führungsrohr ein Endoskop zu mechanisch beanspruchten Wälzlagern im Getriebe bzw. Planetengetriebe geführt. Darüber hinaus ist es möglich, Verzahnungsbereiche von Wellen oder Ritzeln oder andere mechanisch stark beanspruchte Bereiche innerhalb des Getriebes zu inspizieren.

Außerdem ist es in einer Ausgestaltung von Vorteil, wenn das Führungsmittel, z.B. Führungsrohr und/oder Führungsschlauch, im Inneren des Getriebegehäuses wenigstens abschnittsweise an oder auf ortsfesten Bauteilen des Getriebes und/oder wenigstens das Führungsmittel im Inneren des Getriebegehäuses wenigstens abschnittsweise an oder auf gegenüber dem Getriebegehäuse beweglichen oder bewegbaren, insbesondere rotierenden oder rotierbaren, Bauteilen des Getriebes angeordnet ist. Hierdurch ist es möglich, dass Abschnitte des Führungsmittels bzw. Führungsrohrabschnitte sowohl an nicht bewegten als auch an bewegten Bauteilen im Inneren des Getriebes, beispielsweise über Abstandshalter oder dergleichen, an den Bauteilen angeordnet werden, wobei die Führungsrohrabschnitte, die auf bewegten Bauteilen angeordnet sind, in vorbestimmte Positionen gebracht werden, so dass dieser Führungsrohrabschnitt mit anderen Führungsrohrabschnitten, die beispielsweise an unbewegten Bauteilen angeordnet sind, zusammenwirken, so dass mehrere Führungsrohrabschnitte insgesamt ein Führungsrohr ergeben, durch das ein Arbeitsinstrument eingebracht wird.

Ferner ist es in einer Ausgestaltung von Vorteil, wenn das Führungsrohr aus mehreren Abschnitten ausgebildet ist. Bevorzugt werden Führungsrohrabschnitte im Inneren des Getriebes vorgesehen, die gehäusefest montiert sind, sowie andere Abschnitte, die auf gegenüber dem Gehäuse bewegbaren, insbesondere rotierenden Bauteilen des Getriebes angeordnet sind. Hierdurch ist es möglich, durch Rotation der Bauteile die Führungsrohrabschnitte so zueinander zu positionieren, dass sie miteinander zusammenwirken und dass in diesen vorbestimmten Positionen mehrere Führungsrohrabschnitte insgesamt ein Führungsrohr ergeben, durch die das Arbeitsinstrument eingebracht wird.

Die Anordnung auf rotierenden und nichtrotierenden Bauteilen kann bevorzugt über bzw. mittels Abstandshalter und dergleichen erfolgen.

Weiterhin können Führungsrohre vorgesehen sein, deren Abschnitte auf mehreren, mit unterschiedlicher Drehzahl umlaufenden Bauteilen angeordnet sind, die so in eine vorbestimmte Position gebracht werden, dass sie untereinander und mit einer Zugangsöffnung im Getriebegehäuse zusammenwirken, damit ein Arbeitsinstrument eingebracht werden kann.

Darüber hinaus ist es im Rahmen der Erfindung möglich, dass ein Führungsrohr, das an einem beweglichen Bauteil des Getriebes angeordnet ist, in eine entsprechende Einbringposition bzw. Arbeitsposition für das Führungsrohr in Bezug auf die Zugangsöffnung gebracht wird, so dass in dieser festen Einbringposition des Führungsrohres beispielsweise ein Endoskop über das Führungsrohr bzw. das Leerrohr in das Getriebegehäuse eingeführt wird.

Des Weiteren ist es in einer Ausgestaltung von Vorteil, dass das Führungsmittel mehrere Führungsmittelabschnitte, wie z.B. Rohrabschnitte und/oder Schlauchabschnitte, aufweist, die, insbesondere bei Einbringen eines oder des Arbeitsinstruments in das Führungsmittel, miteinander kommunizieren und zueinander ausgerichtet oder ausrichtbar sind. Hierdurch wird die Führung und Positionierbarkeit des Arbeitsinstrumentes innerhalb des Getriebegehäuses, beispielsweise in einem Planetengetriebe, erleichtert.

Überdies werden der Einbringvorgang und die Handhabung des Arbeitsinstrumentes dadurch verbessert, dass das Führungsmittel, z.B. Führungsrohr, gerade und/oder gebogene Führungsmittelabschnitte bzw. Führungsrohrabschnitte aufweist, so dass das Arbeitsinstrument entsprechend an vorbestimmte Bereiche oder Bauteile des Getriebes positionierbar ist.

Außerdem ist es in einer Ausgestaltung günstig, wenn im Führungsrohr bzw. Führungsschlauch Öffnungen, beispielsweise in Gestalt von kleinen Perforationslöchern oder -öffnungen, vorgesehen sind, so dass beispielsweise beim Einschieben eines Arbeitswerkzeuges in das Leerrohr bzw. das Führungsrohr Getriebeöl aus dem Führungsrohr bzw. dem Führungsrohrabschnitt austritt, um das Arbeitsinstrument nicht zu verschmutzen und funktionstüchtig zu halten. Während des Einschiebevorgangs tritt dann das Öl aus den Öffnungen oder Perforationsöffnungen am Führungsrohr entsprechend aus, wobei das Arbeitsinstrument innerhalb der Innenwandung des Führungsrohrs gehalten wird. Durch die Öffnungen bzw. Perforationslöcher wird somit auf einfache Weise ein Druckausgleich erzielt, wenn der Führungsrohrabschnitt beispielsweise in einem Ölsumpf oder dergleichen angeordnet ist.

Des Weiteren ist es besonders vorteilhaft, wenn das Führungsmittel, insbesondere Führungsrohr und/oder Führungsschlauch, insbesondere am Ende oder am Ausgang des Führungsmittels im Innenraum bzw. im Getriebegehäuse, eine Ölabstreifeinrichtung aufweist, so dass beispielsweise die Optik eines Endoskops als Arbeitsinstrument von Öl befreit wird. Dabei kann beispielsweise die Ölabstreifeinrichtung mittels einer Dichtlippe oder Gummilippe ausgebildet sein.

Eine weitere Lösung der Aufgabe bzw. eine Weiterbildung des Getriebes zeichnet sich dadurch aus, dass im Getriebegehäuse wenigstens eine optische Einrichtung, insbesondere Spiegel oder Prisma oder dergleichen, angeordnet ist oder dass im Getriebegehäuse ein Teil einer optischen Einrichtung, insbesondere eines Endoskops, insbesondere dauerhaft, angeordnet ist, wobei insbesondere unter Verwendung der optischen Einrichtung und unter Verwendung eines im Getriebegehäuse, insbesondere über ein Führungsrohr oder Leerrohr oder einen Führungsschlauch, eingebrachten oder vorgesehenen Arbeitsinstruments das Innere des Getriebegehäuses, insbesondere Bauteile des Getriebes, geprüft werden oder prüfbar sind oder physikalische Eigenschaften von Medien im Getriebe, z.B. Getriebeöl oder dergleichen, oder physikalische Eigenschaften von Bauteilen des Getriebes erfasst werden oder erfassbar sind. Dadurch, dass an vorbestimmten Stellen im Inneren des Getriebegehäuses Spiegel oder andere optische Einrichtungen vorgesehen sind, mittels denen schwer zugängliche Bereiche für ein Arbeitsinstrument, beispielsweise ein Endoskop, einsehbar werden, werden unter Verwendung eines Arbeitsinstrumentes, das beispielsweise durch Einschieben in ein im Getriebegehäuse angeordnetes Führungsrohr eingebracht wird, auch weitere für die Inspektion oder für Wartungsmaßnahmen relevante Bereiche von Bauteilen einsehbar.

Im Rahmen der Erfindung ist es möglich, dass ein oder mehrere Bestandteile eines Endoskops, z.B. eine Optik eines Endoskops, als optischen Einrichtung im Getriebegehäuse dauerhaft angeordnet ist, d.h. fest installiert ist und auch beim Betrieb des Getriebes im Getriebegehäuse vorhanden ist bzw. verbleibt. Dabei werden in einer Ausgestaltung die vorgesehenen Führungsmittel als Halteeinrichtungen oder Halter für die optische Einheit eines Endoskops verwendet. Beispielsweise ist ferner als ein im Getriebe dauerhaft angeordnetes Teil eines Endoskops als Lichtleiter oder Lichtquelle ausgebildet.

Insbesondere sind beispielsweise im Bereich der Austrittsseite der Führungsmittel bzw. der Führungsrohre entsprechende Spiegel angeordnet, so dass durch die Umlenkspiegel unter Verwendung des Endoskops im Bereich des Umlenkspiegels oder der Umlenkspiegel ein hinterer Bereich eines Bauteils, beispielsweise eines Planetenträgers oder dergleichen, auf recht einfache Weise inspiziert werden kann. Dabei können die optischen Einrichtungen bzw. Spiegel an ortsfesten und/oder auch an beweglichen, d.h. rotierbaren oder rotierenden, Bauteilen angeordnet werden, wobei durch die Anordnung der optischen Einrichtung bzw. Spiegel keine baulichen Maßnahmen an den Bauteilen vorgenommen werden bzw. sind.

Darüber hinaus zeichnet sich das Getriebe in einer Weiterbildung dadurch aus, dass die Zugangsöffnung, insbesondere für ein oder mehrere separate Führungsmittel bzw. Führungsrohre, verschließbar ausgebildet ist. Beispielsweise kann hierfür ein Deckel oder ein Verschluss vorgesehen sein, um die Zugangsöffnung zu verschließen, so dass beispielsweise im Betrieb des Getriebes über die verschlossene Zugangsöffnung aus dem Getriebe kein Öl entweicht oder Schmutz eindringen kann.

Ferner wird die Aufgabe gelöst durch eine Windenergieanlage mit einem Getriebe, das wie voranstehend ausgebildet ist. Zur Vermeidung von Wiederholungen wird auf die obigen Ausführungen ausdrücklich verwiesen.

Weiterhin wird die Aufgabe gelöst durch eine Verwendung eines Arbeitsinstruments in einem Getriebegehäuse eines Getriebes, insbesondere Planetengetriebes, einer Windenergieanlage, wobei wenigstens ein Führungsmittel oder Führungsrohr für das Arbeitsinstrument im Inneren des Getriebes bzw. im Innenraum des Getriebegehäuses vorgesehen ist, wobei das Getriebe wie voranstehend ausführlich beschrieben ausgebildet ist. Zur Vermeidung von Wiederholungen wird auf die obigen Ausführungen ebenfalls ausdrücklich verwiesen.

Des Weiteren ist es in einer Ausgestaltung vorteilhaft, wenn das Arbeitsinstrument als Inspektionseinrichtung, insbesondere Endoskop, und/oder als Messeinrichtung, insbesondere Sensor, weiter vorzugsweise als Infrarotsensor oder dergleichen, und/oder als Werkzeug, insbesondere Bearbeitungswerkzeug, ausgebildet ist, um entsprechende Maßnahmen oder Wartungsarbeiten im Inneren des Getriebes an den vorbestimmten Stellen durchzuführen.

Je nach Ausrichtung sowie Ausbildung bzw. Anordnung der Führungsmittel im Getriebeinneren können im Rahmen der Erfindung starre oder flexible Endoskope verwendet werden. Die dafür vorgesehenen Endoskope übertragen dabei die Bildinformationen aus dem Getriebeinneren an einen Bildschirm oder dergleichen und/oder speichern die erfassten Bilddaten als Einzelbild, Bildserie oder Video auf einem Speichermedium.

Des Weiteren ist es in einer Weiterbildung möglich, die Führungsmittel als Halterungen oder als Halteeinrichtung für eine im Getriebeinneren fest installierte oder angeordnete Optik als optische Einrichtung eines Endoskops zu verwenden. Bei einer derartigen Ausführung können beispielsweise ein Lichtleiter eines Endoskops und/oder eine Lichtquelle eines Endoskops im Getriebeinneren als optische Einheit installiert bzw. angeordnet werden und dort verbleiben. Bei einer Wartung des Getriebes unter Verwendung eines in dem Getriebeinneren ausgebildeten Endoskops werden weitere Komponenten des Endoskops mit der bereits im Getriebeinneren installierten Optik bzw. optischen Einrichtung oder Einheit des Endoskops verbunden, um ein für den Einsatz komplettes Endoskop, das aus den entfernbaren Komponenten und der mit den Komponenten zusammenwirkenden Optik bzw. optischen Einrichtung zusammengebaut ist, bereitzustellen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen exemplarisch beschrieben, wobei bezüglich aller im Text nicht näher erläuterten erfindungsgemäßen Einzelheiten ausdrücklich auf die schematischen Zeichnungen verwiesen wird. Es zeigen:
- Fig. 1: eine schematische Darstellung einer Windenergieanlage;
- Fig. 2: eine schematische Querschnittsansicht einer Gondel einer Windenergieanlage und
- Fig. 3: schematisch ein erfindungsgemäßes Getriebe bzw. Planetengetriebe einer Windenergieanlage im Querschnitt.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

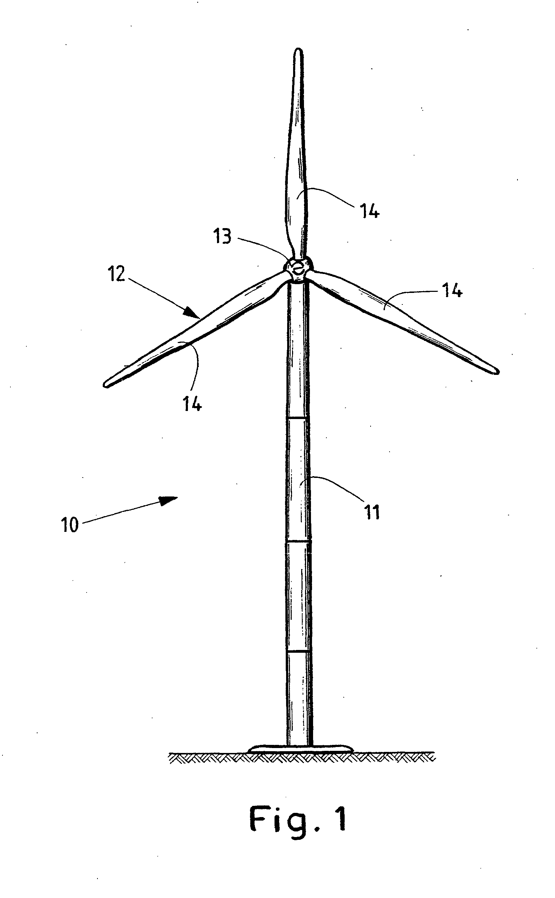

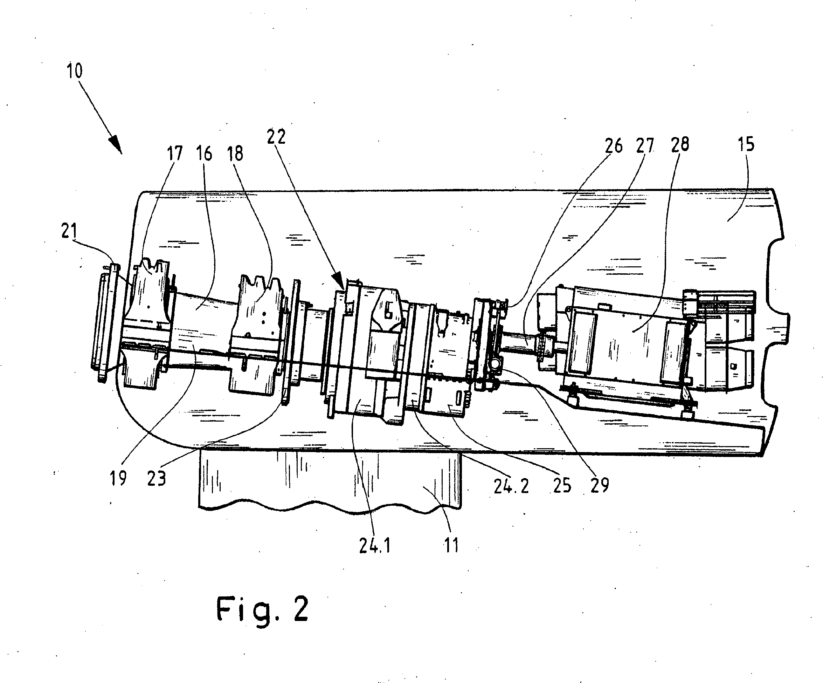

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht sich der Rotor 12 in an sich bekannter Weise. Hierdurch kann Leistung von einem an den Rotor 12 bzw. an die Rotornabe 13 angeschlossenen Generator in einem auf dem Turm 11 und hinter dem Rotor 12 angeordneten Maschinenhaus (vgl. Fig. 2) erzeugt werden und in ein Verbrauchernetz abgegeben werden.

Fig. 2 zeigt schematisch eine Querschnittsansicht eines auf dem Turm 11 angeordneten Maschinenhauses 15 bzw. einer Gondel der Windenergieanlage 10. Im rotorseitigen Bereich des Maschinenhauses 15 ist eine Rotorwelle 16 in zwei Lagerböcken 17, 18 auf einem leicht geneigten Maschinenrahmen 19 gelagert. Die Rotorwelle 16 ragt zur Rotorseite aus dem Maschinenhaus 15 hinaus und weist auf der Außenseite einen Rotorflansch 21 auf, an dem der Rotor 12 bzw. die Rotornabe 13 eines Rotors befestigt ist (vgl. Fig. 1).

Die dem Rotor 12 abgewandte Seite der Rotorwelle 16 ist im Maschinenhaus 15 mit einem mehrstufigen Getriebe 22 verbunden, wobei zwischen dem Lagerbock 18 und der Eingangsseite des Getriebes 22 eine Arretiervorrichtung 23 vorgesehen ist, so dass sich der Rotor 12 während des Stillstands zu Wartungsarbeiten an der Windenergieanlage 10 arretieren lässt bzw. arretiert wird.

Das mehrstufige Getriebe 22 besteht aus zwei hintereinander angeordneten Planetenstufen 24.1, 24.2, die in mechanischer Wirkverbindung miteinander sind. Darüber hinaus steht die zweite Planetengetriebestufe 24.2 mit einer hinteren Stirnradstufe 25 des Getriebes 22 in Wirkverbindung.

Durch das mehrstufige Getriebe 22 wird die niedrige Drehzahl der Rotorwelle 16 über mehrere Stufen in eine hohe Drehzahl einer Abtriebswelle umgewandelt, die über eine Kupplung 27 einen Generator 28 antreibt. Im Rahmen der Erfindung ist es möglich, dass das mehrstufige Getriebe 22 auch eine Planetenstufe und zwei Stirnradstufen oder beliebige andere Kombinationen von Stufen aufweisen kann.

Auf der generatorseitigen bzw. rotorabgewandten Seite einer Abtriebswelle der Stirnradstufe 25 ist eine Rotorbremse 26 sowie die Kupplung bzw. Generatorkupplung 27 angeordnet. Die Kupplung 27 ist dabei mit der Generatorwelle verbunden. Unterhalb der Rotorbremse 26 ist in Verlängerung der Rotorwellenachse eine Schleifringeinheit 29 für die Blattverstellung der Rotorblätter 14 (Fig. 1) angeordnet. Die Schleifringeinheit 29 bildet zusammen mit einem durch das Getriebe 22 bis in die Rotorwelle 26 verlaufenden Kabelrohr die Energieversorgungseinrichtung für die Rotornabe 13 (Fig. 1).

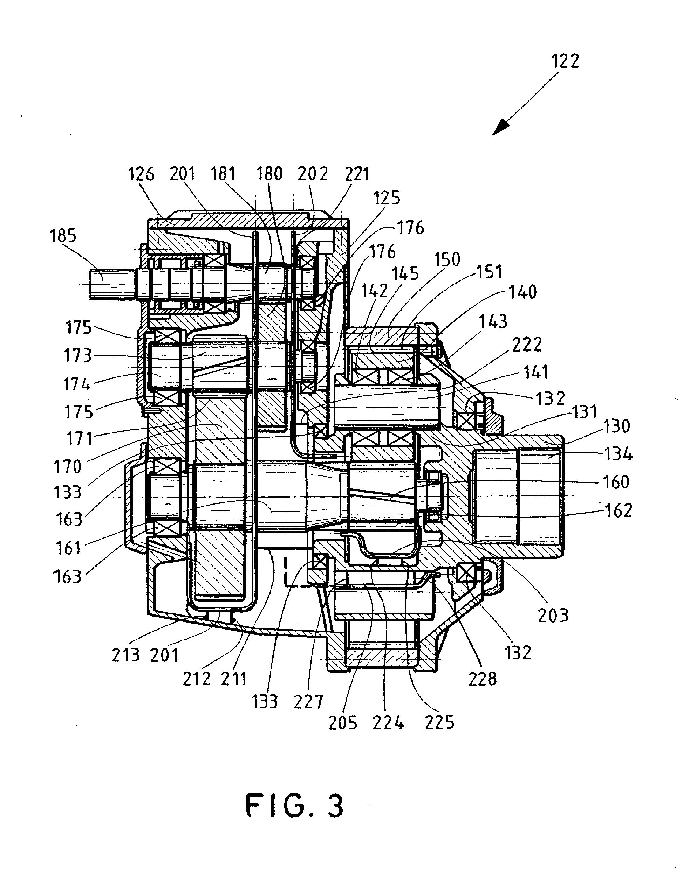

In Fig. 3 ist schematisch ein Querschnitt durch ein dreistufiges Getriebe 122 einer Windenergieanlage dargestellt, wobei das Getriebe 122 eine Planetenstufe als erste Getriebestufe und zwei Stirnradstufen als zweite und dritte Getriebestufen aufweist. Das Getriebe 122 verfügt über ein Gehäuse 125, in dem die drei Getriebestufen angeordnet sind.

Zur Rotorseite bzw. zur Rotorwellenseite ist ein Wellenstummel zur Aufnahme der Rotorwelle bzw. eine Planetenträgerwelle 130 mit einem Planetenträger 131 angeordnet, wobei der Planetenträger 131 mittels eines vorderen Lagers 132 und eines hinteren Lagers 133 drehbar im Inneren des Getriebes gelagert ist. Die Planetenträgerwelle 130 weist zur Rotorwelle hin eine Aufnahme 134 auf, die mit der Rotorwelle verbunden wird.

Am Planetenträger 131 sind mehrere Planetenräder 140 angeordnet, wobei aus Gründen der Darstellbarkeit in Fig. 3 lediglich ein Planetenrad 140 im Querschnitt dargestellt ist. Das Planetenrad 140 ist über einem zwischen dem Planetenträger 131 und dem Planetenrad 140 angeordneten Planetenbolzen 141 angeordnet, wobei zwischen dem Planetenbolzen 141 und dem ihn umgebenden Planetenrad 140 zwei Lager 142, 143 angeordnet sind, so dass das Planetenrad 140 um den Planetenbolzen 141 rotierbar gelagert ist.

Das Planetenrad 140 weist an seiner Außenseite eine Verzahnung 145 auf, die in eine Verzahnung 151 eines die Planetenräder 140 umgebenden Hohlrades 150 eingreift. Das ortsfeste Hohlrad 150 weist zur Innenseite die Verzahnung 151 auf, so dass durch Rotation des Planetenträgers 131 die daran angeordneten Planetenräder 140 ebenfalls rotieren und die Verzahnungen 145 der Planetenräder 140 in die Verzahnung 151 des gehäusefesten Hohlrades 150 eingreifen.

Im inneren Bereich der Planetenträger 140 ist ein Sonnenrad 160 angeordnet, das auf einer Sonnenradwelle 161 angeordnet ist. Das Sonnenrad 160 weist an seiner Außenseite eine Verzahnung 162 auf, die in die Verzahnung 145 der Planetenräder 140 eingreift. Unter Rotation des Planetenträgers 130 wird das Sonnenrad 160 mittels der rotierenden Planetenräder ebenfalls rotatorisch angetrieben.

Am vom Sonnenrad 160 abgewandten Ende der Sonnenwelle 161 ist auf der Sonnenwelle 161 ein Stirnrad 170 mit einer Außenverzahnung 171 angeordnet. Die Sonnenwelle 161 ist am äußeren Ende mittels eines Lagers 163 drehbar gelagert.

Die Verzahnung 171 des Stirnrades 170 befindet sich im Eingriff mit einem Ritzel 173, das auf einer Zwischenwelle 174 angeordnet bzw. ausgebildet ist. Die Zwischenwelle 174 ist mittels zweiter äußerer Lager 175, 176 drehbar gelagert.

Ferner ist auf der Zwischenwelle 174 ein Stirnrad 180 angeordnet, das mit seiner Außenverzahnung in ein Ritzel 181 auf einer rotierbaren Abtriebswelle 185 ausgebildet ist. Die Abtriebswelle 185 ist abtriebsseitig mit dem Generator der Windenergieanlage verbunden.

Darüber hinaus sind im Innenraum des Gehäuses 125 erfindungsgemäß mehrere Leerrohre 201, 202 angeordnet, in die nach Entfernung eines Inspektionsdeckels 126 an der Oberseite des Getriebes bzw. des Getriebegehäuses 125 Arbeitsinstrumente wie z.B. ein Endoskop in die Leerrohre 201, 202 von außen bzw. von extern eingeschoben werden.

Das Leerrohr 201 ist mittels Halterungen 21 1, 212, 213 ortsfest im Inneren des Getriebes 122 angeordnet. Das Leerrohr 201 verfügt über gerade Rohrabschnitte und gebogene Rohrabschnitte, so dass das Leerrohr 201 J-förmig bzw. U-förmig im Getriebeinneren ausgebildet ist, wodurch nach Einschieben eines Endoskops in das Leerrohr 201 der Bereich der Sonnenradwelle 161 zwischen dem Stirnrad 170 und dem Lager 163 der Sonnenradwelle 161 untersucht werden kann. Durch die Verwendung des Leerrohrs 201 kann bei Inspektionsarbeiten auf die Demontage weiterer Inspektionsdeckel oder Lagerdeckel des Getriebes 122 bzw. des Getriebegehäuses 125 verzichtet werden, da die Verlegung bzw. Anordnung des Leerrohrs 201 von einem zentralen Ort, z.B. an der Oberseite des Getriebes 122, erfolgt. Dadurch wird aufgrund der exakten Führung eines eingeschobenen Endoskops im Leerrohr 201 die Zeit für die Inspektion bzw. die Positionierung eines Inspektionswerkzeugs an der entsprechenden Stelle verkürzt, wobei zusätzlich der Schmutzeintrag in das Getriebe minimiert wird.

Das zweite Leerrohr 202 ist ebenfalls über Halterungen 221, 222 an der Gehäuseinnenwand ortsfest befestigt, wobei mittels eines in das Leerrohr 202 eingebrachten Endoskops der Verzahnungsbereich zwischen den Planetenstufen 140 und dem Sonnenrad 160 untersucht werden kann.

Darüber hinaus ist in Fig. 3 dargestellt, dass auch an einem rotierenden Bauteil, wie z.B. dem Planetenträger 130 ein Leerrohrabschnitt 203 mittels zweiter Halterungen 224, 225 angeordnet ist, wobei unter Rotation des Planetenträgers 130 die Eintrittsöffnung des Leerrohrs 203 mit der unteren Austrittsöffnung des Leerrohrs 202 in Deckung gebracht werden kann, so dass über das Leerrohr 202 und den damit in der Arbeitsposition kommunizierenden Leerrohrabschnitt 203, wenn diese in Deckung positioniert sind, der Bereich hinter dem Sonnenrad 160 zwischen dem Sonnenrad und dem Planetenträger 131 durch Einschieben eines Endoskops inspiziert werden kann.

Außerdem ist am Planetenträger 131 ein weiteres Leerrohr 205 mittels zweier Abstandshalterungen 227, 228 angeordnet, so dass durch Einschieben eines Endoskops in das Leerrohr 205 das Lager 132 untersucht werden kann. Das Leerrohr 205 weist einen Leerrohrabschnitt auf, der aus der Zeichenebene herausragt, so dass dieser weitere Abschnitt des Leerrohrs 205 nur gestrichelt angedeutet ist.

Dadurch, dass Lehrrohre auch an rotierenden Bauteilen des Getriebes befestigt werden bzw. angeordnet sind, sind bei einer definierten Position bzw. Arbeitsposition durch feststehende Leerrohre auch schwer zugängliche Bereiche innerhalb des Getriebes 122 untersuchbar. Somit werden auch Orte im Getriebe erreicht, die aufgrund von Hinterschneidungen mit feststehenden Leerrohren allein nicht oder nur sehr schwer zugänglich wären.

Darüber hinaus ist es im Rahmen der Erfindung möglich, dass an den Ausgängen der Leerrohre an der Austrittsseite, beispielsweise Spiegel oder dergleichen, angeordnet sind, so dass unter Verwendung eines Endoskops als Arbeitsinstrument und von Spiegeln auch die Einsicht in weitere stark mechanisch beanspruchte und schwer zugängliche Bereiche im Inneren des Gehäuses ermöglicht werden.

Die Leerrohre 202, 203, 204 und 205 im Inneren des Getriebes 125 sind derart ausgebildet, dass durch einfaches Einschieben eines Endoskops als Arbeitsinstrument in die Leerrohre schwer zugängliche Bereiche innerhalb des Getriebes zur Inspektion schnell erreicht werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Windenergieanlage
- 11: Turm
- 12: Rotor
- 13: Rotornabe
- 14: Rotorblätter
- 15: Maschinenhaus
- 16: Rotorwelle
- 17: Lagerbock
- 18: Lagerbock
- 19: Maschinenrahmen
- 21: Rotorflansch
- 22: mehrstufiges Getriebe
- 23: Arretiervorrichtung
- 24.1: erste Planetenstufe
- 24.2: zweite Planetenstufe
- 25: Stirnradstufe
- 26: Rotorbremse
- 27: Kupplung
- 28: Generator
- 29: Schleifringeinheit
- 122: Getriebe
- 125: Gehäuse
- 126: Inspektionsdeckel
- 130: Planetenträgerwelle
- 131: Planetenträger
- 132: Lager
- 133: Lager
- 134: Aufnahme
- 140: Planetenrad
- 141: Planetenbolzen
- 142: Lager
- 143: Lager
- 145: Verzahnung
- 150: Hohlrad
- 151: Verzahnung
- 160: Sonnenrad
- 161: Sonnenradwelle
- 162: Verzahnung
- 163: Lager
- 170: Stirnrad
- 171: Verzahnung
- 173: Ritzel
- 174: Zwischenwelle
- 175: Lager
- 176: Lager
- 180: Stirnrad
- 181: Ritzel
- 185: Abtriebswelle
- 201: Leerrohr
- 202: Leerrohr
- 203: Leerrohr
- 205: Leerrohr
- 211: Halterung
- 212: Halterung
- 213: Halterung
- 221: Halterung
- 222: Halterung
- 224: Halterung
- 225: Halterung
- 227: Halterung
- 228: Halterung

## Patentansprüche

1. Getriebe (122) einer Windenergieanlage, insbesondere mehrstufiges Getriebe (122) einer Windenergieanlage, wobei das Getriebe (122) ein Getriebegehäuse (125) aufweist, wobei an der Außenseite des Getriebegehäuses (125) wenigstens eine Zugangsöffnung zum Einbringen eines Arbeitsinstruments in das Getriebegehäuse (125) vorgesehen ist und dass im Inneren des Getriebegehäuses (125) wenigstens ein Führungsmittel (201, 202, 203, 204, 205) für das Arbeitsinstrument vorgesehen ist, so dass das Arbeitsinstrument innerhalb des Führungsmittels (201, 202, 203, 204, 205) bewegbar und/oder positionierbar ist, wobei insbesondere mittels des im Führungsmittel (201, 202, 203, 204, 205) eingebrachten oder angeordneten oder anordbaren Arbeitsinstruments Teile des Getriebes (122) im Getriebegehäuse (125) geprüft und/oder bearbeitet werden oder wenigstens eine physikalische Eigenschaft eines Mediums, insbesondere von Öl, im Getriebegehäuse (125) oder physikalische Eigenschaften von Bauteilen des Getriebes (122) erfasst werden, **dadurch gekennzeichnet, dass** das Führungsmittel (201, 202, 203, 204, 205) als Führungsrohr (201, 202, 203, 204, 205) und/oder als Führungsschlauch ausgebildet ist.

2. Getriebe (122) nach Anspruch 1, **dadurch gekennzeichnet, dass** das Führungsmittel (201, 202, 203, 204, 205) im Querschnitt abschnittsweise geschlossen ausgebildet ist.

3. Getriebe (122) nach Anspruch 1 oder 2, **dadurch gekennzeichnet, dass** das Führungsmittel (201, 202, 203, 204, 205) im Inneren des Getriebegehäuses (125) wenigstens abschnittsweise an oder auf ortsfesten Bauteilen des Getriebes (122) und/oder das Führungsmittel (201, 202, 203, 204, 205) wenigstens abschnittsweise an oder auf gegenüber dem Getriebegehäuse (125) beweglichen oder bewegbaren, insbesondere rotierenden oder rotierbaren, Bauteilen des Getriebes (122) angeordnet ist.

4. Getriebe (122) nach einem der Ansprüche 1 bis 3, **dadurch gekennzeichnet, dass** das Führungsmittel (201, 202, 203, 204, 205) mehrere Führungsmittelabschnitte aufweist, die, insbesondere bei Einbringen eines oder des Arbeitsinstruments in das Führungsmittel, miteinander kommunizieren und zueinander ausgerichtet oder ausrichtbar sind.

5. Getriebe (122) nach einem der Ansprüche 1 bis 4, **dadurch gekennzeichnet, dass** das Führungsmittel (201, 202, 203, 204, 205) gerade und/oder gebogene Rohrabschnitte aufweist.

6. Getriebe (122) nach einem der Ansprüche 1 bis 5, **dadurch gekennzeichnet, dass** im Führungsmittel (201, 202, 203, 204, 205) Öffnungen vorgesehen sind.

7. Getriebe (122) nach einem der Ansprüche 1 bis 6, **dadurch gekennzeichnet, dass** das Führungsmittel, insbesondere am Ende oder am Ausgang des Führungsmittels (201, 202, 203, 204, 205), eine Ölabstreifeinrichtung aufweist.

8. Getriebe (122) nach einem der Ansprüche 1 bis 7, **dadurch gekennzeichnet, dass** im Getriebegehäuse (125) wenigstens eine optische Einrichtung, insbesondere Spiegel oder Prisma, angeordnet ist oder dass im Getriebegehäuse (125) ein Teil einer optischen Einrichtung, insbesondere eines Endoskops, insbesondere dauerhaft, angeordnet ist, wobei insbesondere unter Verwendung der optischen Einrichtung und unter Verwendung eines im Getriebegehäuse (125) eingebrachten oder vorgesehenen Arbeitsinstruments, das Innere des Getriebegehäuses (125), insbesondere Bauteile des Getriebes (122), geprüft werden oder prüfbar sind oder physikalische Eigenschaften von Medien im Getriebe oder physikalische Eigenschaften von Bauteilen des Getriebes (122) erfasst werden oder erfassbar sind.

9. Getriebe (122) nach einem der Ansprüche 1 bis 8, **dadurch gekennzeichnet, dass** die Zugangsöffnung, insbesondere für ein oder mehrere Führungsmittel, verschließbar ausgebildet ist.

10. Windenergieanlage mit einem Getriebe (122) nach einem der Ansprüche 1 bis 9.

11. Verwendung eines Arbeitsinstruments in einem Getriebegehäuse (125) eines Getriebes (122) einer Windenergieanlage, wobei das Getriebe (122) nach einem der Ansprüche 1 bis 9 ausgebildet ist.

12. Verwendung nach Anspruch 11, **dadurch gekennzeichnet, dass** das Arbeitsinstrument als Inspektionseinrichtung, insbesondere Endoskop, und/oder als Messeinrichtung, insbesondere Sensor, und/oder als Werkzeug, insbesondere Bearbeitungswerkzeug, ausgebildet ist.

## Claims

1. A transmission (122) for a wind turbine, particularly a multistage transmission (122) for a wind turbine, wherein the transmission (122) includes a transmission housing (125), wherein provided on the outer surface of the transmission housing (125) there is at least one access opening for the introduction of a working instrument into the transmission housing (125) and that in the interior of the transmission housing (125) at least one guide means (201, 202, 203, 204, 205) for the working instrument is provided so that the working instrument is movable and/or positionable within the guide means (201, 202, 203, 204, 205), wherein, particularly by means of the working instrument introduced or arranged or arrangable in the guide means (201, 202, 203, 204, 205), components of the transmission (122) in the transmission housing (125) can be checked and/or worked on or at least one physical property of a medium, particularly of oil, in the transmission housing (125) or physical properties of components of the transmission (122) are determined, **characterised in that** the guide means (201, 202, 203, 204, 205) is constructed in the form of a guide tube (201, 202, 203, 204, 205) and/or in the form of a guide sleeve.

2. A transmission (122) as claimed in Claim 1, **characterised in that** the guide means (201, 202, 203, 204, 205) is of closed construction in portions in cross-section.

3. A transmission (122) as claimed in Claim 1 or 2, **characterised in that** the guide means (201, 202, 203, 204, 205) in the interior of the transmission housing (125) is arranged, at least in sections, on or at fixed components of the transmission (122) and/or the guide means (201, 202, 203, 204, 205) is arranged, at least in sections, on or at components of the transmission (122) which are moving or movable, particularly rotating or rotatable, with respect to the transmission housing (125).

4. A transmission (122) as claimed in one of Claims 1 to 3, **characterised in that** the guide means (201, 202, 203, 204, 205) includes a plurality of guide means sections, which, particularly when a or the working instrument is introduced into the guide means, communicate with one another and are aligned or alignable with respect to one another.

5. A transmission (122) as claimed in one of Claims 1 to 4, **characterised in that** the guide means (201, 202, 203, 204, 205) has straight and/or curved tube sections.

6. A transmission (122) as claimed in one of Claims 1 to 5, **characterised in that** openings are provided in the guide means (201, 202, 203, 204, 205).

7. A transmission (122) as claimed in one of Claims 1 to 6, **characterised in that** the guide means includes an oil stripping device, particularly at the end or at the outlet of the guide means (201, 202, 203, 204, 205).

8. A transmission (122) as claimed in one of Claims 1 to 7, **characterised in that** arranged in the transmission housing (125) there is at least one optical device, particularly a mirror or prism, or that arranged, in particular permanently, in the transmission housing (125) there is a portion of an optical device, particularly an endoscope, wherein, in particular, by using the optical device and using a working instrument provided or introduced into the transmission housing (125), the interior of the transmission housing (125), particularly components of the transmission (122), are checked or checkable or physical properties of media in the transmission or physical properties of components of the transmission (122) are determined or determinable.

9. A transmission (122) as claimed in one of Claims 1 to 8, **characterised in that** the access opening, particularly for one or more guide means, is constructed to be closable.

10. A wind turbine with a transmission (122) as claimed in one of Claims 1 to 9.

11. Use of a working instrument in a transmission housing (125) of a transmission (122) of a wind turbine, wherein the transmission (122) is constructed in accordance with one of Claims 1 to 9.

12. Use as claimed in Claim 11, **characterised in that** the working instrument is constructed in the form of an inspection device, particularly an endoscope, and/or in the form of a measuring device, particularly a sensor, and/or in the form of a tool, particularly a cutting tool.

## Revendications

1. Transmission (122) pour une installation éolienne, en particulier une transmission multi-étagée (122) pour une installation éolienne, la transmission (122) comprenant un carter de transmission (125), le carter de transmission (125) comprenant sur son côté extérieur au moins une ouverture d'accès pour l'introduction d'un instrument de travail dans le carter de transmission (125) et à l'intérieur du carter de transmission (125), au moins un moyen de guidage (201, 202, 203, 204, 205) pour l'instrument de travail est prévu, de sorte que l'instrument de travail à l'intérieur des moyens de guidage (201, 202, 203, 204, 205) peut être déplacé et / ou peut être positionné, transmission dans laquelle, en particulier, les composants de la transmission (122) sont étudiés par l'intermédiaire de l'outil de travail introduit ou agencé ou disposé par les moyens de guidage (201, 202, 203, 204, 205) dans le carter d'engrenage (125) ou au moins une propriété physique d'un milieu, en particulier de l'huile, est étudiée ou les propriétés physiques des éléments de la transmission (122) sont enregistrées, **caractérisée en ce que** les moyens de guidage (201, 202, 203, 204, 205) sont conçus comme un tube de guidage (201, 202, 203, 204, 205) et / ou comme un tuyau de guidage.

2. Transmission (122) selon la revendication 1, **caractérisée en ce que** les moyens de guidage (201, 202, 203, 204, 205) sont formés en sections transversales dans des sections fermées.

3. Transmission (122) selon la revendication 1 ou la revendication 2, **caractérisée en ce que** les moyens de guidage (201, 202, 203, 204, 205), à l'intérieur du carter de transmission (125), sont disposés, au moins partiellement, dans ou sur des composants fixes de la transmission (122) et / ou que les moyens de guidage (201, 202, 203, 204, 205) sont disposés, au moins partiellement, dans ou sur des éléments mobile (122) ou déplaçable, en particulier par roulement ou par rotation, par rapport au carter de transmission (125).

4. Transmission (122) selon l'une quelconque des revendications 1 à 3, **caractérisée en ce que** les moyens de guidage (201, 202, 203, 204, 205) comprennent, en particulier dans le cas de l'introduction d'un ou de plusieurs instruments de travail dans les moyens de guidage, une pluralité de sections de moyens de guidage qui communiquent les unes avec les autres et qui sont alignées les unes avec les autres ou qui peuvent être alignées.

5. Transmission (122) selon l'une quelconque des revendications 1 à 4, **caractérisée en ce que** les moyens de guidage (201, 202, 203, 204, 205) comprennent des sections de tubes rectilignes et / ou courbes.

6. Transmission (122) selon l'une quelconque des revendications 1 à 5, **caractérisée en ce que** des ouvertures sont prévues dans les moyens de guidage (201, 202, 203, 204, 205).

7. Transmission (122) selon l'une quelconque des revendications 1 à 6, **caractérisée en ce que** les moyens de guidage, en particulier à la fin ou à la sortie des moyens de guidage (201, 202, 203, 204, 205), comportent un racleur d'huile.

8. Transmission (122) selon l'une quelconque des revendications 1 à 7, **caractérisée en ce que** dans le carter de transmission (125), au moins un dispositif optique, notamment un miroir ou un prisme, est agencé ou que, dans le carter de transmission (125), une partie d'un dispositif optique, en particulier un endoscope, est agencée, en particulier de manière permanente, dans laquelle en particulier, en utilisant le dispositif optique et un instrument de travail introduit dans le carter de transmission (215), à l'intérieur du carter de transmission (125), les composants de la transmission (122) sont testés ou peuvent être testés ou les propriétés physiques du support dans la transmission ou les propriétés physiques de la transmission (122) sont enregistrés ou sont détectés.

9. Transmission (122) selon l'une quelconque des revendications 1 à 8, **caractérisée en ce que** l'ouverture d'accès, en particulier pour un ou plusieurs moyens de guidage, peut être fermée.

10. Installation éolienne comportant une transmission (122) selon l'une quelconque des revendications 1 à 9.

11. Utilisation d'un instrument de travail dans un carter de transmission (125) d'une transmission (122) d'une installation éolienne, la transmission (122) étant conçue selon l'une quelconque des revendications 1 à 9.

12. Utilisation selon la revendication 11, **caractérisée en ce que** l'instrument de travail est conçu comme un dispositif d'inspection, en particulier un endoscope, et / ou comme un dispositif de mesure, en particulier comme un capteur et / ou comme un outil, en particulier un outil d'usinage.
